(19) **Europäisches Patentamt**

**European Patent Office**

**Office européen des brevets**

(11) **EP 1 083 519 A2**

(12) **EUROPEAN PATENT APPLICATION**

(43) Date of publication:
**14.03.2001 Bulletin 2001/11**

(51) Int. Cl.$^7$: **G06K 19/077**, G06K 7/00

(21) Application number: **00307807.8**

(22) Date of filing: **08.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.09.1999 ZA 9905799**

(71) Applicant:
**Supersensor (Proprietary) Limited
Midrand 1685, Gauteng (ZA)**

(72) Inventors:
• **Kruger, Johan David
  Witkoppen 2068, Gauteng (ZA)**
• **Fourie, Andries Petrus Cronje
  Johanesburg, Gauteng (ZA)**

• **Turner, Christopher Gordon Gervase
  Halfway House, Gauteng (ZA)**

(74) Representative: **Haley, Stephen
  Gill Jennings & Every,
  Broadgate House,
  7 Eldon Street
  London EC2M 7LH (GB)**

Remarks:
A request for correction of some pages of the description and the claims has been filed pursuant to Rule 88 EPC. A decision on the request will be taken during the proceedings before the Examining Division (Guidelines for Examination in the EPO, A-V, 3.).

(54) **Method of mounting RF transponders on containers**

(57) A container 10 comprises a reflective contents 16 which, in use, reflects radio frequency energy. A transponder 22 of a radio frequency identification is mounted on the container. The identification system operates with an energizing signal having an operating wavelength . The transponder comprises an antenna 26 comprising a feed element 26.1. The feed element is spaced from reflective contents 16 by an electrical distance of at least /100. A dielectric medium 20 is located between the feed element and the reflective element, to space the feed element from the reflective contents.

FIGURE 1

**EP 1 083 519 A2**

## Description

### INTRODUCTION AND BACKGROUND

THIS invention relates to electronic identification systems and more particularly to such systems including radio frequency (RF) transponders.

Electronic identification systems including an interrogator or reader and a plurality of passive transponders are well known in the art. In use, the interrogator transmits a RF energizing signal in the ultra high frequency (UHF) band towards the transponders to be identified and read. The transponder utilizes the energy in the energizing signal to power local circuits forming part of the transponder and then responds to the energizing signal by transmitting a response signal including an identification code to the interrogator. The interrogator receives the signal and reads the identification code. The code read is utilized to identify the transponder and an article or container on which it is mounted.

A problem with these systems when used in conjunction with articles such as containers which reflect RF energy is that due to destructive interference between an incident energizing signal and reflections thereof from the container, a transponder mounted in conventional way on a wall of the container, often cannot derive sufficient energy from the energizing signal. It is also believed that some articles may have a detuning effect by changing the transponder antenna impedance, thereby also inhibiting the transponder from deriving sufficient energy.

### OBJECT OF THE INVENTION

Accordingly, it is an object of the present invention to provide an article and a method of providing a transponder on an article with which the applicant believes the aforementioned disadvantages may at least be alleviated.

### SUMMARY OF THE INVENTION

An article comprising a reflective element which, in use, reflects radio frequency energy; a transponder of a radio frequency identification system having an operating wavelength , the transponder comprising an antenna comprising a feed element, the feed element being spaced from the reflective element by an electrical distance of at least /100; and a dielectric medium between the feed element and the reflective element.

In this specification the term electrical distance ($d_e$) is used in relation to physical distance (d) in the following manner:

$$d_e = d\left[\frac{c}{v_m}\right]$$

wherein

c is the speed of an electromagnetic wave through free space, and

$v_m$ is the speed of the wave through the dielectric medium.

The article is preferably portable and may be a container comprising a wall.

The reflective element may be constituted by the wall. Alternatively, the reflective element may comprise a contents of a container having a dielectric wall.

The reflective element and/or dielectric medium may constitute an essential part of the antenna.

The dielectric medium may comprise a body of dielectric material mounted on the wall and on which the feed element is mounted to space it from the reflective element.

The container may comprise a closure assembly comprising a closure element for the container, an anchor member mounted on the container and a link between the anchor member and the closure element, and the feed element is preferably mounted on the assembly.

The closure element may comprise a cap and the anchor member may comprise a collar mounted on a neck of the container. The cap, collar and the link are preferably integrally formed from a plastics material and the feed element is preferably provided on the link.

In other embodiments the feed element may be provided in a neck region of the container and the dielectric medium may at least partially be provided by a head space in the container between the feed element and the contents of the container.

In another embodiment the feed element may be mounted in a dielectric casing attached by a flexible link to the article and wherein the casing constitutes the dielectric medium. The casing may be provided by encapsulation of the feed element.

In yet another embodiment the dielectric medium may comprise a thickening of the wall of the container.

In yet another embodiment the dielectric medium may comprise an insert of a dielectric material provided in the wall of the container. The insert may be in the form of a loop provided in a peripheral channel in the wall of the container.

In still another embodiment the dielectric medium may comprise a second wall and an air-gap between the wall and the second wall.

Also included within the scope of the present invention is any array of self-contained articles, each article comprising a reflective element which, in use, reflects radio frequency energy; a transponder of a radio frequency identification system having an operating wavelength , the transponder comprising an antenna comprising a feed element, the feed element being spaced from the reflective element by an electrical distance of at least /100; and a dielectric medium between the feed element and the reflective element.

Yet further included within the scope of the present invention is a method of providing a transponder of an electronic identification system having an operating wavelength of on an article comprising a reflective element, the method comprising the steps of:

- spacing a feed element of an antenna of the transponder by an electrical distance of at least /100 from the reflective element; and
- providing a dielectric medium between the feed element and the reflective element.

The invention also includes within its scope a cap assembly for a container comprising a transponder of an electronic identification system mounted thereon and a dielectric medium for spacing the transponder from the container.

In the Drawings

The invention will now further be described, by way of example only, with reference to the accompanying diagrams wherein:

figure 1    is a diagrammatic representation of a first embodiment of an article according to the invention in the form of a container comprising a RF transponder;

figure 2    is a diagrammatic representation of second embodiment of a container according to the invention comprising a RF transponder;

figure 3    is a section on line III in figure 2;

figure 4    is a diagrammatic representation of a third embodiment of a container according to the invention comprising a RF transponder;

figure 5    is a diagrammatic representation partially in section of a fourth embodiment of a container according to the invention comprising a RF transponder;

figure 6    is a section through a wall of a fifth embodiment of a container according to the invention comprising a RF transponder;

figure 7    is a diagrammatic representation of a cap assembly for a container comprising a RF transponder;

figure 8    is a diagrammatic representation of a sixth embodiment of a container according to the invention;

figure 9    is a diagrammatic representation of seventh embodiment of a container according to the invention;

figure 10   is a diagrammatic representation of an arrangement of self-contained articles according to the invention; and

figure 11   is a block diagram of an electronic identification system comprising a reader or interrogator and a plurality of transponders.

**DESCRIPTION OF PREFERRED EMBODIMENTS OF THE INVENTION**

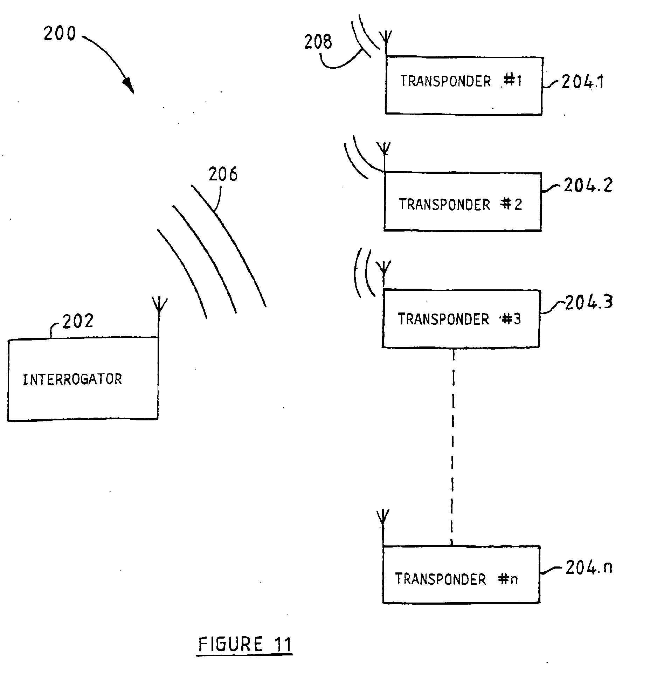

A block diagram of a known electronic identification system 200 is shown in figure 11. The system comprises a reader or interrogator 202 and a plurality of passive transponders 204.1 to 204.n In use, the transponders are mounted on articles or items such as containers to be identified or counted. Hence each transponder is normally associated with a respective article.

In use, the articles are identified by causing the interrogator to transmit a radio frequency (RF) interrogation signal 206 towards the articles. The interrogation signal typically comprises a carrier having a carrier frequency $f_c$ in the range 400 MHz to 3GHz, typically 900 MHz. Each transponder utilizes energy in the energizing signal to power local circuits forming part of the transponder and then responds to the energizing signal by transmitting a response signal 208 including an identification code to the interrogator. The interrogator receives, the response signal and reads the identification code. The code read is used by the interrogator to identify and count the transponders and hence the articles or containers with which they are associated.

In the introduction of this specification, problems encountered when transponders of the aforementioned kind are used with reflective articles such as conductive containers such as metal cans, or other containers containing a conductive fluid.

It is known that an incident electromagnetic energizing signal is reflected by a conductive surface with a consequent 180° phase change. It is also known that due to destructive interference between the incident signal and the reflected signal the total electric field strength ($E_T$) at an electrical distance $d_e$ from the reflective surface which distance is small relative to the wavelength of the incident signal is given by the equation: .

$$E_T(d_e) = E_i\,(d_e) + E_r\,(d_e)$$

wherein:

$E_i\,(d_e)$    is the electric field strength of the incident energizing signal at $d_e$ ;and

$E_r\,(d_e)$    is the electric field strength of the reflected signal at $d_e$.

With perfect reflection:

$$E_T(d_e) = E_i(d_e)$$

at $d_e = /12$

For $d_e$ bigger than $/12$,

$$E_T(d_e) > E_i(d_e)$$

For example, at $d_e = /4$

$$E_T(d_e) = 2E_i(d_e)$$

which is the maximum value.

For $d_e$ smaller than $/12$

$$E_T(d_e) < E_i(d_e)$$

For example, at $d_e = /24$

$$E_T(d_e) = \frac{E_i(d_e)}{2}$$

It is believed that for $d_e > /100$ improved results compared to the prior art would be achieved.

It is further known that the electric distance $d_e$ is related to the physical distance d of a position spaced by a dielectric medium from the surface according to the following equation:

$$d_e = d\left[\frac{c}{v_m}\right] = d_r$$

wherein

- c is the speed at which the signal travels through free space;
- $v_m$ is the speed at which the signal travels through the dielectric medium; and
- $_r$ is the dielectric constant of the pure dielectric medium.

Since the dielectric constant of dielectric media other than free space is bigger than 1, the actual or physical distance d from the reflective surface may be made smaller than the electrical distance $d_e$, by providing a dielectric medium other than free space between the position and the reflective surface.

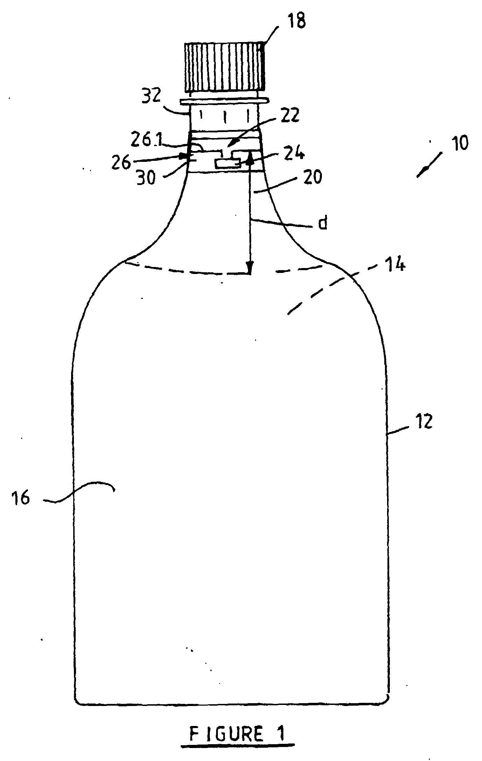

A first embodiment of an article according to the invention in the form of a container comprising a radio frequency (RF) transponder is generally designated by the reference numeral 10 in figure 1.

The container 10 comprises a body 12 of a dielectric material defining a chamber 14 for holding a product such as liquid 16 which is electricity conductive. The container 10 is closed by a cap 18 and defines a head space 20 between the liquid 16 and the cap 18.

A transponder 22 including a chip or die 24 and an antenna 26 is mounted on a substrate 30. The chip comprises integrated electronic transponder circuitry and the antenna comprises a feed element 26.1 connected to the chip at a feed point. The substrate is in the form of a collar which is mountable in a neck region 32 of the container, so that air in the head space 20 separates the feed element 26.1 from the liquid 16 by a distance d which is equivalent to an electrical distance $d_e$ of at least $/100$, preferably $/50$ and even more preferably at least $/12$, up to a maximum of $/4$ of the operating wavelength of the electronic identification system. It is believed that such an arrangement would improve the operation of an electronic identification system of which the transponder forms part, and more particularly the operation of the transponder.

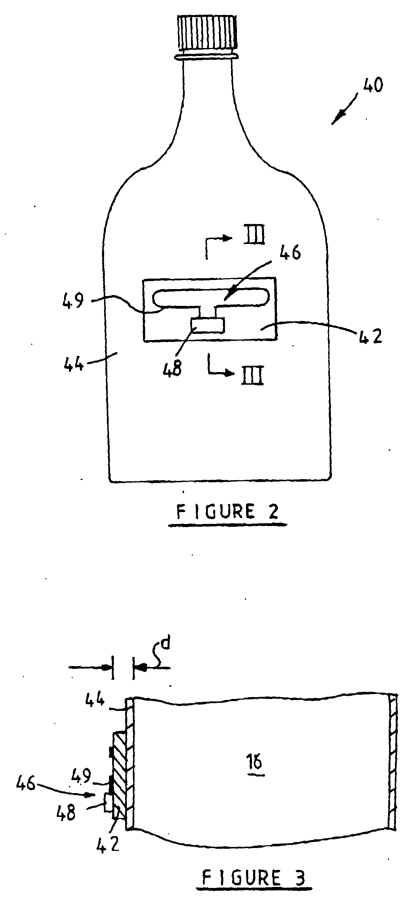

In figures 2 and 3, there is shown a second embodiment of the container according to the invention, designated 40. The container 40 includes a platform 42 of a suitable dielectric material mounted on a sidewall 44 of the container. A substrate carrying a transponder 46 including chip 48 and an antenna feed element 50 screen printed thereon, is mounted on the platform. The platform 42 separates the feed element from the liquid 16 by a distance d which is equivalent to an electrical distance $d_e$ of at least $/24$, to improve the operation of the transponder and identification system as a whole.

In a third embodiment, the container 50 comprises a transponder 54 comprising a chip 56 and an antenna 58 encapsulated in a dielectric encapsulation 52. The encapsulation 52 is secured to the container by a string 60 or the like, so that it is loosely suspended from a neck-region 62 of the container. The encapsulation provides a separation between the antenna and any external surface of the encapsulation by a distance d which is equivalent to an electrical distance of at least $/100$, preferably $/24$, further preferably $/12$.

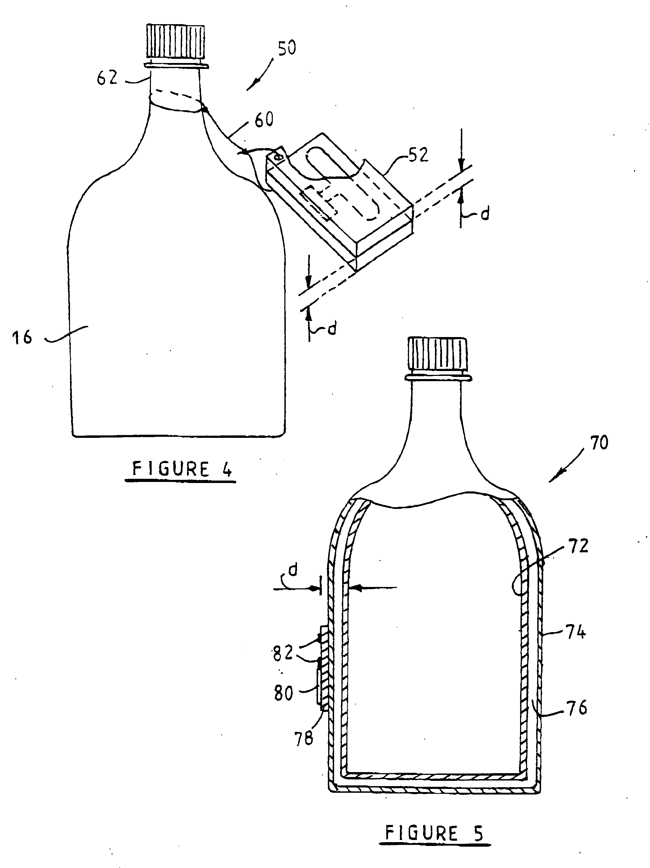

In figure 5, there is shown a fourth embodiment of the container designated 70. The container 70 includes double plastic walls 72 and 74 separated by an airgap 76. A dielectric spacer 78 carrying the transponder including chip 80 and antenna 82 is secured to outer wall 74 of the container. The airgap 76, double walls and spacer serve to separate the transponder from the liquid 16 and hence improves the operation of the transponder and the system when compared with the prior art arrangements.

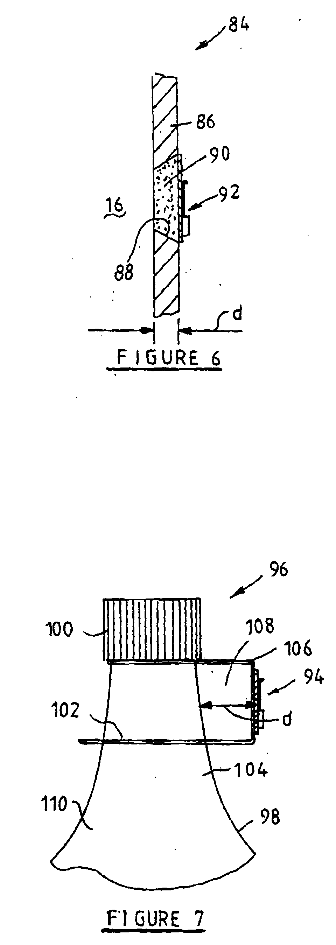

In a fifth embodiment shown in figure 6, the container 84 may have a relatively thick solid wall 86 of a dielectric material. A peripheral annular channel 88 may be defined in the wall. A belt 90 of a material having a suitable dielectric constant is releasably or permanently mounted in the channel. A transponder 92 is mounted on the belt, so that the belt separates the antenna feed element from a liquid 16 in the container by a distance d which is equivalent to an electrical distance of larger than $/100$, preferably larger than $/24$, more preferably larger than $/12$.

In another embodiment the transponder 94 may be mounted on a cap assembly 96 for a container 98. The cap assembly 96 includes a cap 100 for the container, a collar formation 102 removably or permanently mounted about a neck 104 of the container and a link in the form of a platform 106 extending between the cap 100 and the collar formation 102. The transponder 94 is mounted on the platform and air in the region 108 and in the headspace 110 spaces the transponder from the container or liquid in the container.

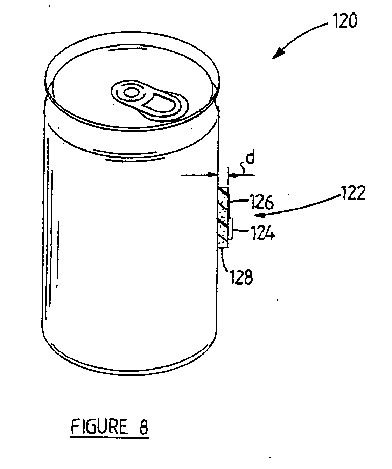

In figure 8, a further embodiment of the container according to the invention is shown. The container 120 is a metal can. Transponder 122 comprising a chip 124 and an antenna comprising a feed element 126 is mounted on the metal wall of the container by a dielectric spacer 128 spacing the antenna feed element from the metal wall. The distance d is equivalent to an electrical distance of larger than /100. Furthermore, the metal wall of the can and/or dielectric spacer may by deliberate antenna design form an essential part of the antenna, to provide optimum performance of the antenna in use.

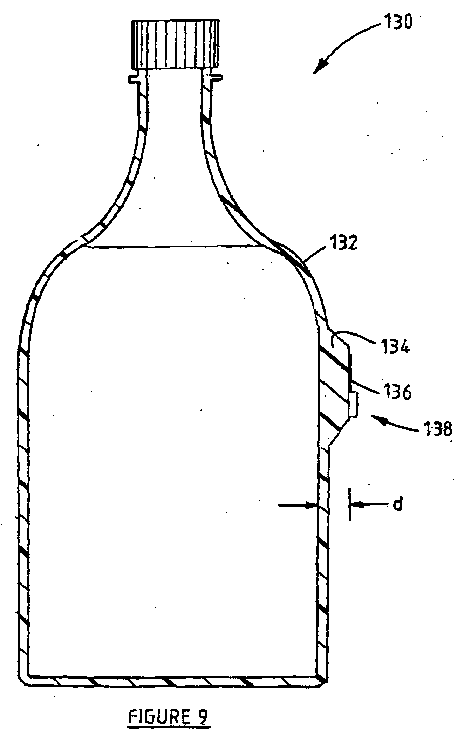

In figure 9, a container 130 with a dielectric wall 132 is shown. In this case a local thickening 134 of the wall serves to separate the antenna 136 of the transponder 138 a required distance d from the contents of the container.

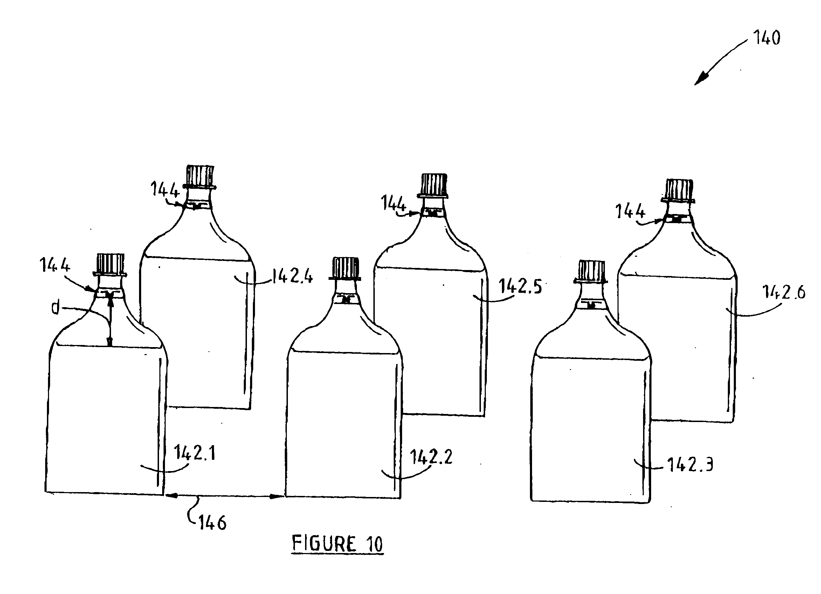

In figure 10, there is shown an array 140 of self contained articles in the form of containers 142.1 to 142.6. Each container comprises a transponder 144 having a feed element which is spaced a required distance d from a reflective surface of the respective article. The spacing 146 between respective containers is also preferable equal to or bigger than d.

**Claims**

1. An article comprising a reflective element which, in use, reflects radio frequency energy; a transponder of a radio frequency identification system having an operating wavelength , the transponder comprising an antenna comprising a feed element, the feed element being spaced from the reflective element by an electrical distance of at least. /100; and a dielectric medium between the feed element and the reflective element.

2. An article as claimed in claim 1 which is portable.

3. An article as claimed in claim 1 which is a container comprising a wall.

4. An article as claimed in claim 3 wherein the reflective element is constituted by the wall.

5. An article as claimed in claim 3 wherein the reflective element comprises a contents of the container having a dielectric wall.

6. An article as claimed in any one of the preceding claims wherein the reflective element constitutes a passive element of the antenna.

7. An article as claimed in claim 3 wherein the dielectric medium. comprises a body of dielectric material mounted on the wall and on which the feed element is mounted to space it from the reflective element.

8. An article as claimed in claim 3 wherein the container comprises a closure assembly, the assembly comprising a closure element for the container, an anchor member mounted on the container and a link between the anchor member and the closure element and wherein the feed element is mounted on the assembly.

9. An article as claimed in claim 8 wherein the closure element comprises a cap and the anchor member comprises a collar mounted on a neck of the container.

10. An article as claimed in claim 9 wherein the cap, collar and the link are integrally formed from a plastics material.

11. An article as claimed in any one of claims 8 to 10 wherein the feed element is provided on the link.

12. An article as claimed in claim 5 wherein the feed element is provided in a neck region of the container and wherein the dielectric medium is at least partially provided by a head space in the container between the feed element and the contents of the container.

13. An article as claimed in claim 1 wherein the feed element is mounted in a dielectric casing attached by a flexible link to the article and wherein the casing constitutes the dielectric medium.

14. An article as claimed in claim 13 wherein the casing is provided by encapsulation of the feed element.

15. An article as claimed in claim 5 wherein the dielectric medium comprises a thickening of the wall of the container.

16. An article as claimed in claim 5 wherein the dielectric medium comprises an insert of a dielectric material provided in the wall of the container.

17. An article as claim in claim 16 wherein the insert is in the form of a loop provided in a peripheral channel in the wall of the container.

18. An article as claimed in claim 5 wherein the dielectric medium comprises a second wall and an air-gap between the wall and the second wall.

**19.** Any array of self-contained articles, each article comprising a reflective. element which, in use, reflects radio frequency energy; a transponder of a radio frequency identification system having an operating wavelength , the transponder comprising an antenna comprising a feed element, the feed element being spaced from the reflective element by an electrical distance of at least /100; and a dielectric medium between the feed element and the reflective element.

**20.** A method of providing a transponder of an electronic identification system having an operating wavelength of on an article comprising a reflective element, the method comprising the steps of:

- spacing a feed element of an antenna of the transponder by an electrical distance of at least /100 from the reflective element; and

- providing a dielectric medium between the feed element and the reflective element.

**21.** A cap assembly for a container comprising a transponder of an electronic identification system mounted thereon and a dielectric medium for spacing the transponder from the container.

FIGURE 1

40

III

46

49

42

44

48

III

FIGURE 2

d

44

16

46  49

48

42

FIGURE 3

FIGURE 4

FIGURE 5

FIGURE 6

FIGURE 7

FIGURE 8

FIGURE 9

FIGURE 10

200

208

TRANSPONDER #1 — 204.1

206

TRANSPONDER #2 — 204.2

TRANSPONDER #3 — 204.3

202

INTERROGATOR

TRANSPONDER #n — 204.n

FIGURE 11